# EUROPEAN PATENT SPECIFICATION

(11) **EP 2 593 605 B1**
(45) Date of publication and mention of the grant of the patent: **22.02.2017**
(21) Application number: 11752649.1
(22) Date of filing: 14.07.2011
(51) Int. Cl.: E02B 3/06, B63B 21/26, B63B 35/44, B63B 21/50, B63B 21/00

(54) **PORT FOR BOATS**
HAFEN FÜR BOOTE
PORT POUR BATEAUX

(30) Priority: 16.07.2010 IT RM20100393
(43) Date of publication of application: 22.05.2013
(73) Proprietor: Cammarota, Luigi, 00197 Roma (IT)
(72) Inventor: Cammarota, Luigi, 00197 Roma (IT)
(74) Representative: Tiburzi, Andrea
(86) International application number: PCT/IT2011/000247
(87) International publication number: WO 2012/007983

(56) References cited:
- WO-A1-97/47876
- AT-B- 184 516
- DE-A1- 2 647 935
- US-A- 1 933 597
- US-A- 4 733 993

## Description

The present invention relates to a port for boats.

More specifically the invention relates to a floating port provided with an innovative anchoring system to the sea bottom, designed and realized specifically to allow the installation of the floating port itself in a large number of sites, regardless of the conditions of the coast.

As it is well known, ports are intended for the protection_and the call of boats. For realizing a port, a thorough search of the site where to build it has to be made, which is chosen not only on the basis of the obliged location, more or less strategic with respect to terrestrial, sea and air communication lines, but above all on the basis of physical conformation of the coast and of local weather-marine conditions.

The construction of a port, therefore, implies a series of preparatory studies for the choice of the site, which take into consideration, among other things, meteorology, waves, tides, topography, morphology, seismicity, sea currents, besides problems related to environmental impact.

The possibility to free the construction of a port from an obliged geographic position is therefore vitally important for all the logistical, commercial, economic and environmental advantages that this may involve.

An example of guiding wall construction suitable as a port is known from patent AT 184516.

Other examples for anchoring floating structures are known from patents US 4733993, WO 9747876 and DE 2647935

In light of the above, it is an object of the present invention to provide a floating port anchored to the sea bottom, capable of overcoming the known problems related to the site selection, so as to be located not at the border between land and sea, but only over the sea, to be capable of resisting to the force of the waves and of compensating for tidal excursions, floating passively on the flow and backflow of them, always keeping unchanged the freeboard of the dock, thereby nullifying the unpleasant effect, typical in a traditional port, of the daily and rhythmical variation of the water level inside the port.

Another object of the present invention is that of making the port capable of orienting its own entrance, so as to bring it behind wind and waves, thus reducing the difficulties and the risks for boats that enter and exit from it.

According to the present invention there is provided a port for boats comprising a floating platform for anchoring said boats, means for anchoring said floating platform to the sea bottom, and compensation means installed within said anchoring means and connected with the base of said floating platform by means of connection members, said compensation means being suitable to compensate the effects of the tide.

Said port comprises a couple of drifts, each one having a first portion under water and a second portion out of water, and being capable of rotating said platform by means of the combined action of the wind and the wave motion. Further according to the invention, each one of said drifts comprises propellers for rotating said platform, and a rudder for the orientation.

Always according to the invention, said anchoring means could comprise a base fixable to said sea bottom and an anchoring pin having its symmetry axis arranged substantially vertically and said anchoring pin having a first end installed within said base, said compensation means could comprise a first cylinder element integral to said anchoring pin, said first cylinder element having the concavity oriented toward said sea bottom, said compensation means further comprising a piston slidably and rotatably coupled with said anchoring pin, capable of partially inserting in said cylinder, and said connection members being ropes, preferably made of steel, or arms connected with said piston, by means of pivot pins, and with the base of said platform.

Still according to the invention, said base could be fixed to said sea bottom by means of piles.

Further according to the invention, said port could comprise energy storage means, capable of transforming mechanic energy of the motion of the tide in electric energy, said energy storage means being interposed between said cylinder and said piston.

Advantageously according to the invention, said platform could have a ring shape and could be provided with an opening.

Always according to the invention, said platform could comprise a connecting structure, having a plurality of concentric rings, realized by tubular beam preferably made of steel, and a plurality of radial arms connected with said concentric rings, said radial arms being realized by tubular beam preferably made of steel, and a bearing structure, having a plurality of ribs, preferably made of steel and having a curved shape, and having a radial transversal frame connected with said arms.

Advantageously according to the invention, said drifts could be arranged on each side of said opening.

The present invention will be now described, for illustrative but not limitative purposes, according to its preferred embodiments, with particular reference to the figures of the enclosed drawings, wherein:
figure 1 shows a perspective view of an embodiment of a port for boats according to the present invention;
figure 2 shows a sectional side view of a further embodiment of a port for boats according to the present invention;
figure 3 shows an embodiment of the anchoring and compensation means of the port according to figure 2;
figure 4 shows a detail of figure 3;
figure 5 shows a plan view of the floating platform of the port according to the present invention;
figure 6 shows a cross-section of a detail of the platform shown in figure 5;
figure 6a shows a plan section of the platform shown in figure 5;
figure 7a shows a longitudinal section view of the direction drift of the port for boats according to the present invention;
figure 7b shows a side view of a portion of the port according to the present invention; and
figure 7c shows a sectional side view of the port according to the present invention.

In the various figures, similar parts will be indicated by the same reference numbers.

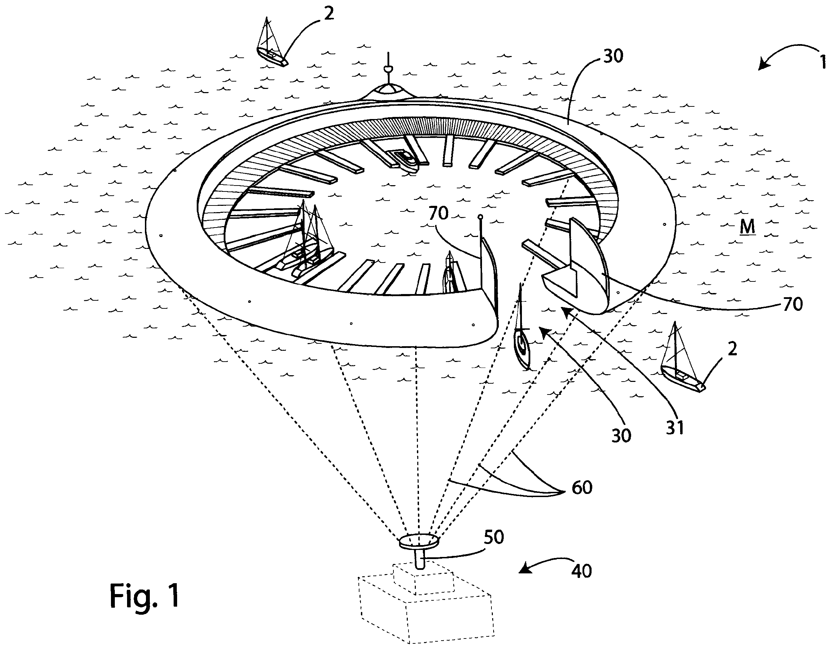

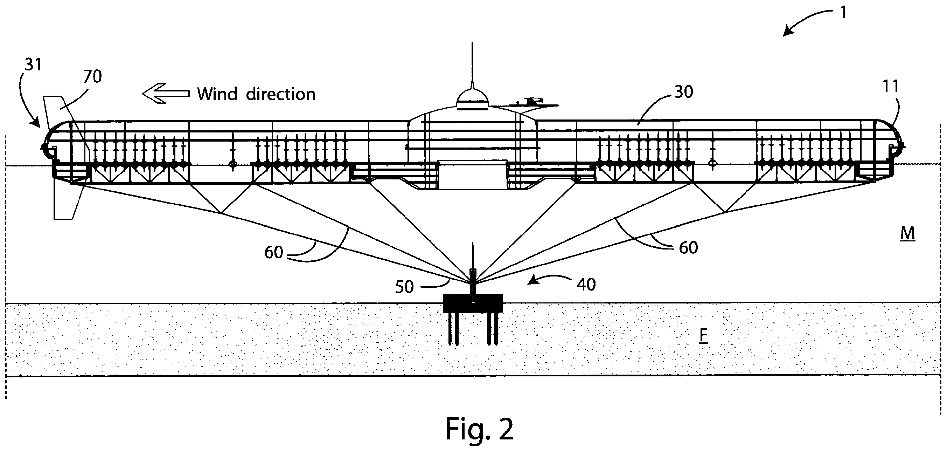

Referring to figures 1 and 2, it is seen a port 1 for boats 2 according to the invention. In particular, said port 1 comprises a platform 30 floating on the sea M, anchoring means 40, fixed to the sea bottom F, and means 50 for the compensation of the tide connected, to the bottom of the platform 30 by means of steel cables or anchoring arms 60.

The port 1 or the floating platform is entirely hulled on its outer surface, so as to create a barrier against the waves. In other words, said port 1 includes a hull 11, which is an external hard cover - similar to that of the aircrafts - shaped so as to reduce aerodynamic resistance (e.g. wind pressure) and, at the same time, to increase resistance to waves. This hull 11 is instead not provided on the internal side, toward the portion of sea that the platform 30 encloses and protects, creating a port area to provide protection and services to the boats 2.

The platform 30 has preferably a ring shape. The entrance 31 of the port 1 is obtained in correspondence of an interruption realized in the body of the ring, which structural continuity is, however, ensured in the submerged part, at a definite depth, which will be compared to the draught of the boats 2, to which access is allowed. It is noted that drifts 70, which extend partially out of the water, are present at the sides of the entrance 31, whose operation will be better described below.

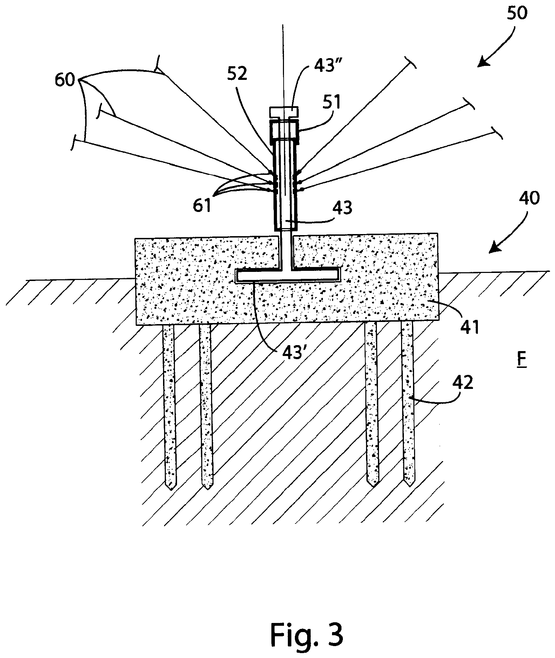

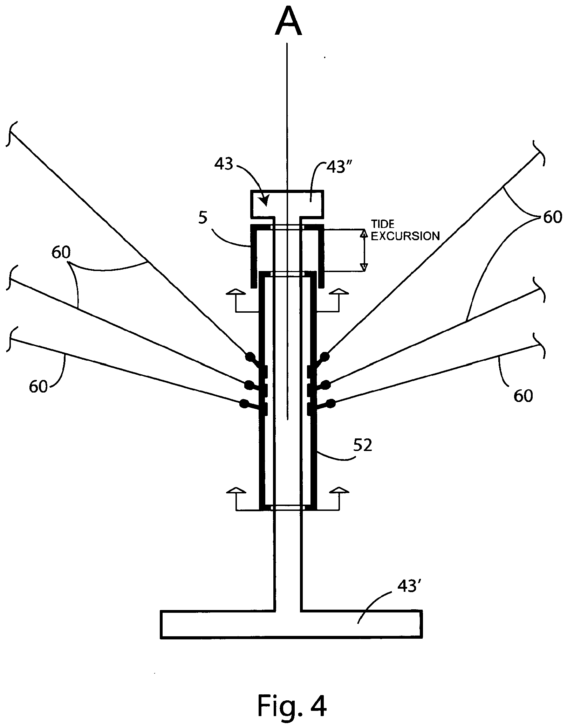

Figures 3 and 4 show the anchoring means 40 fixed to the sea bottom F and the compensation means 50 of the tides. Anchoring means 40 includes a base 41 placed on the sea bottom F. Said base 41 is provided with piles 42 implanted in the bottom F to fix said base 41 permanently. Finally, said anchoring means 40 include an anchor pin 43 vertically arranged, having the lower end 43' fixed to said base 41 and the upper end 43" free.

Compensation means 50 include a cylinder 51 fixed to said anchor pin 43, having concavity oriented towards the bottom (i.e. towards the sea bottom F), and a hollow piston 52, slidably and rotatably coupled with said anchoring pin 43, so as to partially insert in said cylinder 51.

Pivot pins 61 are coupled with said piston, each of said pivot pins 61 is fixed to a steel rope or anchor arm 60.

Thus, due to the tides, said piston 52 is capable of inserting and coming out in/from said cylinder 51, allowing the platform 30 to translate vertically following the wave. In addition, said piston 52, being capable of rotating over said anchor pin 43, which is bound fixed with respect of said fixed base 41, allows the rotation of said platform 30.

Consider that energy storage means between said cylinder 51 and said piston 52 can be placed, suitable for transforming the mechanical energy transmitted by the movement of tides, into electricity that can be used in said platform 30.

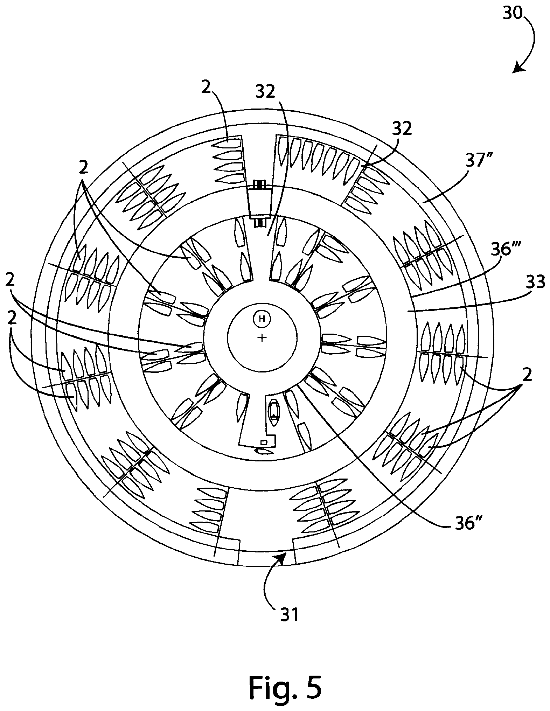

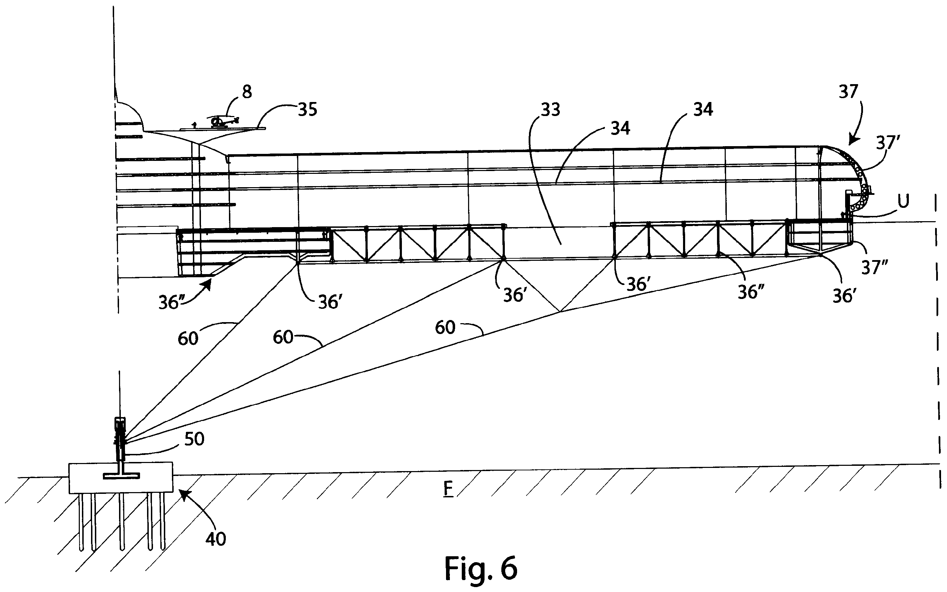

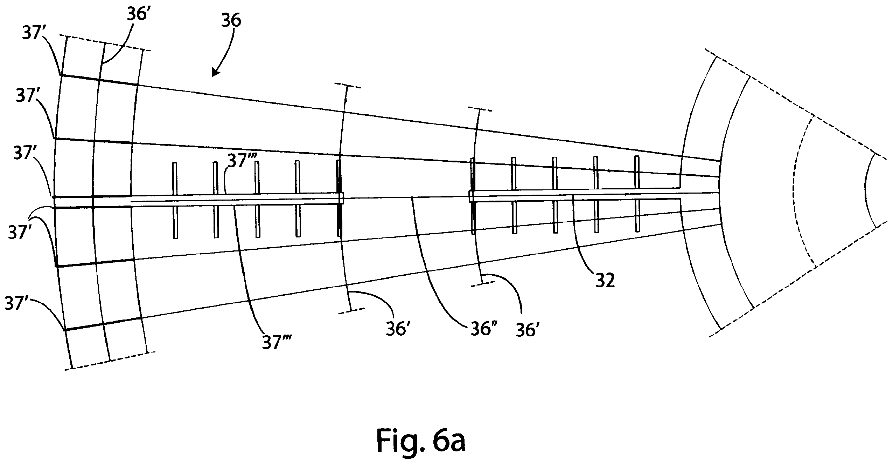

Referring to figures 5, 6 and 6a, it is noted that platform 30 comprises a concentric structure, which provides piers 32 radially arranged, to which boats 2 can be docked, and circular canals 33 (in this case, one), in which said boats 2 can carry out the maneuvers.

In the figures in section, it is seen that the platform section 30 has different planes 34 possibly also underwater, where users U can move. Said platform 30 may also comprise a landing plane 35 for a helicopter 8.

In general, the floating platform 30 can be subdivided into a connection structure 36 and a supporting structure 37.

The connection structure 36, which is entirely submerged and lies on a single horizontal plane, is constituted of concentric rings 36' and arms 36" radial with respect to the geometric center of the platform 30 itself. Said rings 36' and said radial arms 36" are steel tubular with appropriate section. Preferably, said arms 36" are realized as a trestle structure.

In correspondence of each pier 32, said rings 36' and said arms 36" structurally connect the platform 30 with the central island thereof.

The outer and inner rings 36' are located respectively in correspondence of the keel of the floating platform 30 and of the keel of the central island, while the intermediate rings 36' intersect all the heads of the docking piers, thus determining the width extent of maneuver internal canals 33. In addition to fulfill the function of stiffening the overall structure, rings 36' are also suitable to absorb the transverse moments that boats 2 exert to the piers 32 through the moorings by inertia, during the rotation of the port. Said rings 36' and said arms 36" are obviously arranged to a depth such that they do not interfere with the maximum draft of boats 2 housed.

The supporting structure 37 is the set of elements that constitute the skeleton of the floating platform, which is a mesh of vertical and horizontal elements that intersect at nodes, i.e. pillars and beams, all made of stainless steel with a "parallel wings" shaped section.

Main vertical elements of this structure are made by curved shape steel ribs 37', arranged so as to provide the convex side outwards, towards the sea (the form itself provides the appropriate resistance to the impact of the waves). The ribs 37' are arranged in radial sequence, in correspondence of each arm 36" of the connection structure 36.

The pattern of the ribs 37', which are connected in the submerged part with the transversal frame 37" of the keel (ribs), doubles in correspondence of each pier. From that point, the structure continues horizontally toward the geometric center of the port 1 with a couple of parallel beams 37"', which, in addition to operate as a support for the piers 32 and to contain the connections of the respective fingers, are reinforced by said arms 36", so as to ensure the structural stiffness of the whole platform-docks-central island of the port 1.

The whole described supporting structure 37 is firmly connected to the connection structure 36, i.e. to the concentric system of rings 36' and to the radial system of arms 36".

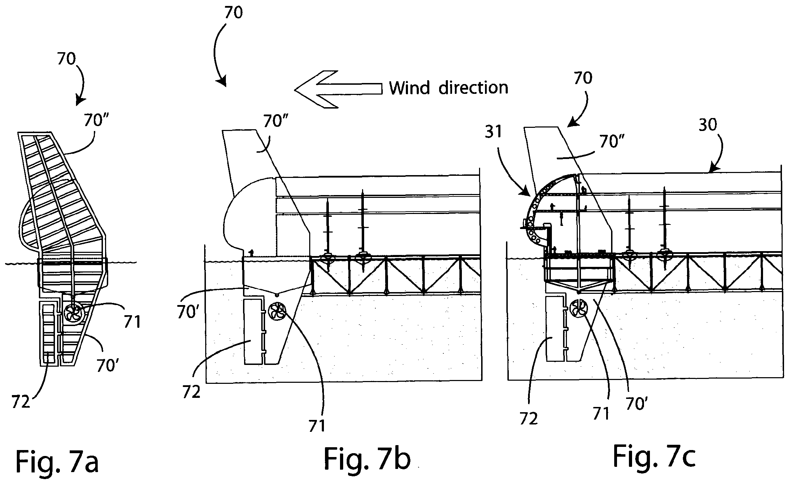

Referring now to figures 7a-7c, drifts 70 can be seen in greater detail, said drifts 70, which, as mentioned above, are arranged at the sides of entrance 31. Said drifts 70 arrange from time to time port entrance in leeward position and in any case behind respect to the wave, offering optimal sea and wind conditions, being generally analogous the directions of both, for entry and exit maneuvers of boats 2. This is possible either automatically, albeit slowly, as explained below, or faster with the possible assistance of two propellers 71 arranged transversely on each drift and properly operated to give a circular motion to the platform 30 in the desired direction (clockwise or counterclockwise).

By rotating around the A-axis, which passes through said anchor pin 43, port 1 arranges automatically or even mechanically by propellers 71, with the entrance 31 behind the sea and/or wind. The only possible movement for the entire structure is the rotation around A-axis that passes through the anchoring center (43).

The structure will in fact be constrained in all directions by the tension of the ropes or anchoring arms 60, radially distributed with respect to the central pin 43, because in all conditions, all the ropes or arms 60 that are from time to time in the "leeward" half portion of the port, will tighten, so as to oppose to the leeway that the port would suffer under the effect of the wind or currents.

As it can be seen, drifts 70 have a first under water portion 70', and a second out of water portion 70", so that said drifts 70, prompted by wind and waves, the out of water ones acting as a airplane rudder and the underwater ones acting as a boat rudder, cause the rotation of the port 1 according to the optimal angle, i.e. the angle at which the port entrance is brought exactly on the opposite side (180°) of the wind direction with respect to the anchoring center (i.e. until drifts 70 oppose the lowest possible resistance to the forces of wind and/or of sea, said drifts 70 shear arranging with respect to them), keeping this angle all the time in which those conditions persist. The propellers 71 are preferably arranged in the first under water portion 70' of said propellers 70.

In addition, each of said propellers includes a rudder 72, suitable to facilitate the movement of the drifts 70.

This allows overcoming the limits of traditional ports, for which some sea currents may occasionally cause a prolonged inaccessibility of the port.

Of course, port 1 has to provide a valid link with the mainland and, on said mainland, an appropriate road network. In fact, as far as close the mainland may be, constant exchanges for both goods and people remain necessary.

In order to satisfy this need, one or more shuttles can be provided that link, according to a frequency correlated with the local maritime traffic, with appropriate structures that constitute of the interchange terrestrial node. If a traditional port is already nearby, the floating port according to the invention is the extension thereof, the shuttle travel back and forth from/to it. Otherwise, just a simple docking pier for the shuttle and just a sufficient amount of equipment for the stop in correspondence of the terrestrial road links, will be sufficient (of course, the construction of these docking piers will not lead to significant interventions on the coast, as far as possible to respect environmental protection).

The advantage to build a port regardless of geographic location, allows the realization of large-scale real interchange nodes for commercial trades that are carried out in the ways of the sea; in any case, alternatively, it allows the realization of a port that can be situated where the nature of the coast does not allow the creation of a traditional port.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Port (1) for boats (2) comprising
a floating platform (30) for anchoring said boats (2), means (40) for anchoring said floating platform (30) to the sea bottom (F), and
compensation means (50) installed within said anchoring means (40) and connected with the base of said floating platform (30) by means of connection members (60), said compensation means (50) being suitable to compensate the effects of the tide,
said port (1) for boats (2) being **characterized**
**in that** it comprises a couple of drifts (70), each one having a first portion (70') under water and a second portion (70") out of water, and being capable of rotating said platform (30) by means of the combined action of the wind and the wave motion, and
**in that** each one of said drifts (70) comprises propellers (71) for rotating said platform (30), and a rudder (72) for the orientation.

2. Port (1) for boats (2) according to claim 1, **characterized in that** said anchoring means (40) comprise a base (41) fixable to said sea bottom (F) and an anchoring pin (43) having its symmetry axis (A) arranged substantially vertically and said anchoring pin (43) having a first end (43') installed within said base (41), said compensation means (50) comprising a first cylinder element (51) integral to said anchoring pin (43), said first cylinder element (51) having the concavity oriented toward said sea bottom (F), said compensation means (50) further comprising a piston (52) slidably and rotatably coupled with said anchoring pin (43), capable of partially inserting in said cylinder (51), and said connection members being ropes, preferably made of steel, or arms (60) connected with said piston (52), by means of pivot pins (61), and with the base of said platform (30).

3. Port (1) for boats (2) according to claim 2, **characterized in that** said base (41) is fixed to said sea bottom by means of piles (42).

4. Port (1) for boats (2) according to any one of claims 2 or 3, **characterized in that** it comprises energy storage means, capable of transforming mechanic energy of the motion of the tide in electric energy, said energy storage means being interposed between said cylinder (51) and said piston (52).

5. Port (1) for boats (2) according to any one of the preceding claims, **characterized in that** said platform (30) has a ring shape and it is provided with an opening (31).

6. Port (1) for boats (2) according to claim 5, **characterized in that** said platform (30) comprises:
a connecting structure (36), having a plurality of concentric rings (36'), realized by tubular beam preferably made of steel, and a plurality of radial arms (36") connected with said concentric rings (36'), said radial arms (36") being realized by tubular beam preferably made of steel;
a bearing structure (37), having a plurality of ribs (37'), preferably made of steel and having a curved shape, and having a radial transversal frame (37") connected with said arms (36").

7. Port (1) for boats (2) according to any one of claims 5 or 6, **characterized in that** said drifts (70) are arranged on each side of said opening (31).

## Patentansprüche

1. Hafen (1) für Boote (2), umfassend
eine schwimmende Plattform (30) zum Verankern der Boote (2),
Mittel (40) zum Verankern der schwimmenden Plattform (30) am Meeresgrund (F), und
Ausgleichsmittel (50), die innerhalb der Verankerungsmittel (40) installiert sind und mit der Basis der schwimmenden Plattform (30) mittels Verbindungsbauteilen (60) verbunden sind, wobei die Ausgleichsmittel (50) geeignet sind, die Auswirkungen der Gezeiten auszugleichen,
wobei der Hafen (1) für Boote (2) **dadurch gekennzeichnet ist, dass** er ein Paar von Driftelementen (70) umfasst, wobei jedes einen ersten Abschnitt (70') unter Wasser und einen zweiten Abschnitt (70") außerhalb des Wassers hat, und die fähig sind, die Plattform (30) mittels der kombinierten Wirkung des Winds und der Wellenbewegung zu drehen, und
dadurch, dass jedes der Driftelemente (70) Propeller (71) zum Drehen der Plattform (30) und ein Ruder (72) für die Ausrichtung umfasst.

2. Hafen (1) für Boote (2) nach Anspruch 1, **dadurch gekennzeichnet, dass** die Verankerungsmittel (40) eine Basis (41), die am Meeresgrund (F) fixierbar ist, und einen Verankerungsbolzen (43), dessen Symmetrieachse (A) im Wesentlichen vertikal angeordnet ist, umfassen und der Verankerungsbolzen (43) ein erstes Ende (43') hat, das innerhalb der Basis (41) installiert ist, wobei die Ausgleichsmittel (50) ein erstes Zylinderelement (51) eingebaut am Verankerungsbolzen (43) umfassen, das erste Zylinderelement (51) die Wölbung in Richtung des Meeresgrund (F) ausgerichtet hat, die Ausgleichsmittel (50) des Weiteren einen Kolben (52) umfassen, der gleit- und drehbar mit dem Verankerungsbolzen (43) gekoppelt ist, der fähig ist, teilweise in den Zylinder (51) eingeführt zu werden, und die Verbindungsbauteile Seile, bevorzugt aus Stahl, oder Arme (60) sind, die mit dem Kolben (52) mittels Drehbolzen (61) und mit der Basis der Plattform (30) verbunden sind.

3. Hafen (1) für Boote (2) nach Anspruch 2, **dadurch gekennzeichnet, dass** die Basis (41) mittels Säulen (42) am Meeresgrund fixiert ist.

4. Hafen (1) für Boote (2) nach einem der Ansprüche 2 oder 3, **dadurch gekennzeichnet, dass** er Energiespeichermittel umfasst, die fähig sind, mechanische Energie der Gezeitenbewegung in elektrische Energie umzuwandeln, wobei die Energiespeichermittel zwischen dem Zylinder (51) und dem Kolben (52) eingesetzt sind.

5. Hafen (1) für Boote (2) nach einem der vorangehenden Ansprüche, **dadurch gekennzeichnet, dass** die Plattform (30) eine Ringform hat und mit einer Öffnung (31) versehen ist.

6. Hafen (1) für Boote (2) nach Anspruch 5, **dadurch gekennzeichnet, dass** die Plattform (30) umfasst:
eine Verbindungsstruktur (36) mit mehreren konzentrischen Ringen (36'), die als röhrenförmige Stange, bevorzugt aus Stahl, ausgeführt sind, und mehreren radialen Armen (36"), die mit den konzentrischen Ringen (36') verbunden sind, wobei die radialen Arme (36") als röhrenförmige Stange, bevorzugt aus Stahl, ausgeführt sind;
eine Lagerstruktur (37) mit mehreren Rippen (37'), bevorzugt aus Stahl, und mit einer gebogenen Form und mit einem radialen querverlaufenden Rahmen (37"), der mit den radialen Armen (36") verbunden ist.

7. Hafen (1) für Boote (2) nach einem der Ansprüche 5 oder 6, **dadurch gekennzeichnet, dass** die Driftelemente (70) an jeder Seite der Öffnung (31) angeordnet sind.

## Revendications

1. Port (1) pour bateaux (2) comprenant :
une plateforme flottante (30) pour ancrer lesdits bateaux (2),
des moyens (40) pour ancrer ladite plateforme flottante (30) au fond (F) de la mer,
des moyens de compensation (50) installés dans lesdits moyens d'ancrage (40) et raccordés à la base de ladite plateforme flottante (30) au moyen d'éléments de raccordement (60), lesdits moyens de compensation (50) convenant pour compenser les effets de la marée,
ledit port (1) pour bateaux (2) étant **caractérisé en ce que** :
il comprend un couple de dérives (70), chacune ayant une première partie (70') sous l'eau et une seconde partie (70") hors de l'eau et qui est capable de faire tourner ladite plateforme (30) au moyen de l'action combinée du vent et du mouvement des vagues, et
chacune desdites dérives (70) comprend des hélices (71) pour faire tourner ladite plateforme (30) et un gouvernail (72) pour l'orientation.

2. Port (1) pour bateaux (2) selon la revendication 1, **caractérisé en ce que** lesdits moyens d'ancrage (40) comprennent une base (41) fixable audit fond (F) de la mer et une broche d'ancrage (43) ayant son axe de symétrie (A) agencée de manière sensiblement verticale et ladite broche d'ancrage (43) ayant une première extrémité (43') installée dans ladite base (41), lesdits moyens de compensation (50) comprenant un premier élément cylindrique (51) constitué d'une pièce avec ladite broche d'ancrage (43), ledit premier élément cylindrique (51) ayant la concavité orientée vers ledit fond (F) de la mer, lesdits moyens de compensation (50) comprenant en outre un piston (52) couplé à coulissement et à rotation avec ladite broche d'ancrage (43), capable de s'insérer partiellement dans ledit cylindre (51), et lesdits éléments de raccordement étant des cordes constituées de préférence d'acier ou des bras (60) raccordés audit piston (52) au moyen de broches pivots (61) et à la base de ladite plateforme (30).

3. Port (1) pour bateaux (2) selon la revendication 2, **caractérisé en ce que** ladite base (41) est fixée audit fond de la mer au moyen de pilots (42).

4. Port (1) pour bateaux (2) selon l'une quelconque des revendications 2 ou 3, **caractérisé en ce qu'**il comprend des moyens de stockage d'énergie capables de transformer l'énergie mécanique du mouvement de la marée en énergie électrique, lesdits moyens de stockage d'énergie étant intercalés entre ledit cylindre (51) et ledit piston (52).

5. Port (1) pour bateaux (2) selon l'une quelconque des revendications précédentes, **caractérisé en ce que** ladite plateforme (30) a une forme annulaire et est pourvue d'une ouverture (31).

6. Port (1) pour bateaux (2) selon la revendication 5, **caractérisé en ce que** ladite plateforme (30) comprend :
une structure de raccordement (36) ayant une pluralité d'anneaux concentriques (36') constitués d'une poutre tubulaire de préférence formée d'acier et une pluralité de bras radiaux (36") raccordés auxdits anneaux concentriques (36'), lesdits bras radiaux (36") étant constitués d'une poutre tubulaire de préférence formée d'acier ;
une structure d'appui (37) ayant une pluralité de nervures (37'), de préférence constituée d'acier et ayant une forme incurvée, et ayant un bâti transversal radial (37") raccordé auxdits bras (36").

7. Port (1) pour bateaux (2) selon l'une quelconque des revendications 5 ou 6, **caractérisé en ce que** lesdites dérives (70) sont aménagées sur chaque côté de ladite ouverture (31).
